# EUROPÄISCHE PATENTSCHRIFT

(11) **EP 2 489 614 B1**
(45) Veröffentlichungstag und Bekanntmachung des Hinweises auf die Patenterteilung: **05.07.2017**
(21) Anmeldenummer: 12154085.0
(22) Anmeldetag: 06.02.2012
(51) Int. Cl.: B65G 47/244, B65G 33/06

(54) **Vorrichtung und Verfahren zum Behandeln von Behältnissen mit Behältnisdrehung**
Method and device for treating containers with container rotation
Dispositif et procédé destinés au traitement de récipients dotés d'une rotation de récipient

(30) Priorität: 15.02.2011 DE 102011011316
(43) Veröffentlichungstag der Anmeldung: 22.08.2012
(73) Patentinhaber: Krones AG, 93073 Neutraubling (DE)
(72) Erfinder: Jogsch, Michael, 93092 Barbing (DE); Raith, Stefan, 93102 Pfatter (DE)
(74) Vertreter: Bittner, Bernhard

(56) Entgegenhaltungen:
- US-A- 3 467 237
- US-A- 3 827 211
- US-A- 5 542 233

## Beschreibung

Die vorliegende Erfindung bezieht sich auf eine Vorrichtung zum Behandeln von Behältnissen. Derartige Vorrichtungen bzw. Anlagen sind aus dem Stand der Technik seit langem bekannt. Dabei ist es üblich, dass die einzelnen Behandlungsschritte in mehreren Schritten durchgeführt werden, beispielsweise zunächst aus Kunststoffvorformlingen Kunststoffbehältnisse hergestellt werden, anschließend die Behältnisse befüllt und/oder auch etikettiert werden. Der Begriff Behältnis bezieht sich im Rahmen dieser Beschreibung sowohl auf bereits hergestellte Kunststoffbehältnisse, als auch auf deren Vorprodukte, wie beispielsweise Kunststoffvorformlinge.

Üblicherweise werden im Stand der Technik die jeweiligen Kunststoffbehältnisse mit Transporteinrichtungen von einer Behandlungseinheit zur nächsten Behandlungseinheit transportiert. Bei derartigen Behandlungseinheiten kann es sich beispielsweise um Transportsterne handeln, welche die Behältnisse entsprechend transportieren. Daneben sind jedoch auch andere Transporteinrichtungen bekannt, wie beispielsweise Luftförderer, bei denen die Behältnisse an deren Tragring geführt und mittels Luftdruck gefördert werden. Die vorliegende Erfindung bezieht sich insbesondere auf solche Behältnisse, die einen von einem kreisförmigen Querschnitt abweichenden Querschnitt aufweisen, wie beispielsweise einen rechteckigen Querschnitt oder dergleichen.

Je nach Bearbeitung der Behältnisse in den jeweiligen nachfolgenden Maschinen ist das Behältnis teilweise in einer gleichbleibenden Orientierung zu transportieren und der jeweiligen Maschine zuzuführen. Hierfür sind heute unterschiedliche Möglichkeiten bekannt, beispielsweise die Ausrichtung in einem Stern, durch eine mechanische Drehvorrichtung oder ähnliches.

Beispielsweise ist aus der US 5,542,233 eine Vorrichtung bekannt, bei der Behältnisse, die einen von einem kreisförmigen Querschnitt abweichenden Querschnitt aufweisen, bereits in einer genau definierten Orientierung von einem Schneckenförderer antransportiert und anschließend um 90° gedreht und einer Behandlungsmaschine zugeführt werden. Derartige Vorrichtungen, wie beispielsweise in der US 5,542,233 beschrieben, erfordern aber einen hohen Platzbedarf und auch ist der Transport der Behältnisse, aufgrund der bereits in dem Schneckenförderer vorhandenen definierten Orientierung der Behältnisse eher aufwendig.

Der vorliegenden Erfindung liegt die Aufgabe zugrunde, derartige Anlagen zum Behandeln von Behältnissen platzsparender zu gestalten. Dies wird erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Behandeln von Behältnissen weist eine erste Behandlungseinheit auf, welche die Behältnisse in einer ersten vorgegebenen Weise behandelt. Daneben weist die Vorrichtung eine Transporteinrichtung auf, welche die Behältnisse von der ersten Behandlungseinheit abtransportiert sowie eine zweite Behandlungseinheit, welche in der Transportrichtung der Behältnisse nach der ersten Behandlungseinheit angeordnet ist und welche die Behältnisse in einer zweiten vorgegebenen Weise behandelt. Dabei weist die Transporteinrichtung eine erste Transporteinheit zum Transportieren der Behältnisse auf und diese erste Transporteinheit weist eine Führungseinrichtung auf, welche die Behältnisse kontaktiert und gegenüber oder mittels der die Behältnisse (insbesondere entlang eines vorgegebenen Transportpfades) bewegt werden und die Transporteinrichtung eine zweite Transporteinheit aufweist, die in der Transportrichtung der Behältnisse nach der ersten Transporteinheit angeordnet ist und welche die Behältnisse während ihres Transports um einen vorgegebenen Winkel bezüglich der Behältnislängsachse dreht.

Die erste Transporteinheit ist dabei vorteilhaft derart gestaltet, dass die Behältnisse gegenüber wenigstens einem Element dieser ersten Transporteinheit geführt werden, beispielsweise gegenüber einer Schiene. Die zweite Transporteinheit dreht die Behältnisse anschließend um einen vorgegebenen Winkel, insbesondere um einen Winkel von 90°. Vorteilhaft bewirkt damit diese zweite Transporteinheit eine einheitliche Drehung. In dieser gedrehten Stellung könnten die Behältnisse an die zweite Behandlungseinheit übergeben werden und so kann, wie unten genauer erläutert wird, diese zweite Behandlungseinheit platzsparender ausgeführt werden.

Vorteilhaft führt die zweite Transporteinheit die Behältnisse in der gedrehten Stellung der zweiten Behandlungseinheit zu. In dieser gedrehten Stellung ist es dann möglich, dass die einzelnen Behandlungsstationen der Behandlungseinheit, beispielsweise Füllstationen, näher aneinander angeordnet sein können und auf diese Weise die gesamte Anordnung platzsparender ausgebildet sein kann.

Vorteilhaft ist die gedrehte Stellung eine Stellung, in der entlang des Transportpfades der Behältnisse eine maximale Anzahl an Behältnissen bzw. an diese Behältnisse aufnehmenden oder behandelnden Behandlungseinheiten angeordnet werden können.

Erfindungsgemäß handelt es sich bei der ersten Transporteinheit um einen Luftförderer. Dabei werden die Behältnisse bevorzugt nicht vereinzelt geführt, sondern hintereinander beispielsweise an ihrem Tragring hängend. Insbesondere bei Behältnissen mit nicht kreisförmigem Querschnitt führt der Transport im Luftförderer dazu, dass sich die Behältnisse derart ausrichten, dass deren längere Seite im Wesentlichen parallel zu der Luftströmung steht. In dieser Ausrichtung ist eine Übergabe an eine weitere Behandlungseinheit, wie beispielsweise eine Fülleinrichtung, ungünstig, da in diesem Fall ein vergleichsweise großer Abstand bzw. eine große Teilung für die einzelnen Behältnisse eingehalten werden muss. Vorteilhaft werden die Behältnisse mittels Druckluft gefördert.

Auf diese Weise ist es möglich, dass z. B. rechteckige Behälter im Lufttransport längs gefördert werden können und dadurch kein Verdrehen im Lufttransport auftritt. Im Anschluss bei der jeweiligen nächsten Maschine, bei der es sich beispielsweise um eine Füllmaschine oder eine Etikettiermaschine oder dergleichen handeln kann, erfolgt wiederum eine Drehung der Behältnisse von einer Längsstellung in eine Querstellung. Auf diese Weise kann unter anderem die nachfolgende Maschine mit einer kleineren Größe ausgeführt werden, da die Teilung in der Maschine durch den Querlauf reduziert wird.

Bei einer weiteren vorteilhaften Ausführungsform ist die erste Behandlungseinheit oder die zweite Behandlungseinheit aus einer Gruppe von Behandlungseinheiten ausgelegt, welche Umformungseinrichtungen zum Umformen von Kunststoffvorformlingen zu Kunststoffbehältnissen, Etikettiereinrichtungen (insbesondere für Behältnisse), Sterilisationseinrichtungen (insbesondere für Behältnisse), Fülleinrichtungen (insbesondere für Behältnisse), Verschließeinrichtungen (insbesondere für Behältnisse) und dergleichen enthält. Bei einer besonders bevorzugten Ausführungsform handelt es sich bei der ersten Behandlungseinheit um eine Umformungseinrichtung zum Umformen von Kunststoffvorformlingen zu Kunststoffbehältnissen und bei der zweiten Behandlungseinheit um eine Fülleinrichtung, welche die erzeugten Kunststoffbehältnisse mit einer Flüssigkeit und insbesondere einem Getränk befüllt.

Bei einer weiteren vorteilhaften Ausführungsform transportiert die zweite Transporteinheit die Behältnisse entlang eines vorgegebenen Transportpfades. Dies bedeutet, dass die zweite Transporteinheit die Behältnisse entlang des vorgegebenen Pfades transportiert und insbesondere während dieses Transports auch die Drehung der Behältnisse bewirkt.

Bei einer weiteren bevorzugten Ausführungsform kontaktiert die zweite Transporteinheit die Behältnisse an deren Grundkörper. Dies bedeutet, dass die Behältnisse insbesondere zum Zwecke der Drehung unterhalb ihrer Mündung (jedoch oberhalb des Bodens), d. h. insbesondere in einem Bereich des Grundkörpers kontaktiert werden.

Bei einer weiteren vorteilhaften Ausführungsform weist die zweite Transporteinheit zwei gegenüberliegende drehbare Schnecken auf (die bevorzugt an einem Behältertransporteur angeordnet bzw. angebaut sind), zwischen denen die Behältnisse gefördert werden. Damit kann hier der Transport der Behältnisse mit zwei gegenüberliegenden Schnecken erfolgen, wobei es jedoch möglich ist, dass noch weitere Schnecken Anwendung finden, beispielsweise zwei gegenüber und zwei übereinander, sodass in Summe das Behältnis von vier Schnecken gefördert wird. Diese Ausführungsform ist insbesondere bei größeren Behältnissen oder zur besseren Stabilität der Behältnisse während der Drehung vorteilhaft.

Bei einer weiteren vorteilhaften Ausführungsform kann die Anordnung der Schnecken auch so ausgeführt sein, dass nur solche Behälter diese Schnecken durchlaufen, welche einen von einer kreisförmigen Querschnitt abweichenden Querschnitt aufweisen. Dabei ist es möglich, dass bei der Verarbeitung von runden Behältern auf der gleichen Linie die besagte zweite Transporteinheit aus dem Transportpfad genommen, beispielsweise zur Seite geschwenkt wird. Auf diese Weise können unterschiedliche Behälterformen und Größen verarbeitet werden und die hier beschriebene zweite Transporteinheit wird nur eingesetzt, wenn die Notwendigkeit einer Ausrichtung bezüglich der Längsrichtung der Behältnisse besteht.

Es wäre jedoch auch möglich, dass die zweite Transporteinheit eine Vielzahl von Greifelementen aufweist, welche die Behältnisse jeweils greifen und damit insbesondere vereinzelt transportieren, wobei besonders bevorzugt die Behältnisse mittels dieser Greifelemente um ihre Längsachse drehbar sind. So könnten die Greifelemente beispielsweise als Dorne ausgeführt sein, welche in die Mündungen der Behältnisse hineinragen und diese dadurch führen. So könnte die zweite Transporteinheit auch als Drehstern ausgebildet sein.

Damit ist bei einer bevorzugten Ausführungsform die zweite Transporteinheit aus dem Transportpfad der Behältnisse auskoppelbar. In diesem Fall wird die beschriebene Drehung der Behältnisse um ihre Längsachse nicht bewirkt.

Die vorliegende Erfindung ist weiterhin auf ein Verfahren zum Behandeln von Behältnissen gerichtet. Dabei werden die Behältnisse in einer ersten vorgegebenen Weise mittels einer ersten Behandlungseinheit behandelt. Anschließend werden die Behältnisse von der ersten Behandlungseinheit zu einer zweiten Behandlungseinheit mit einer Transportrichtung transportiert, wobei die Transporteinrichtung eine erste Transporteinheit aufweist, welche die Behältnisse transportiert, und die erste Transporteinheit eine Führungseinrichtung aufweist, welche die Behältnisse kontaktiert und gegenüber der die Behältnisse bewegt werden. In einem weiteren Verfahrensschritt werden die Behältnisse mit der zweiten Behandlungseinheit in einer zweiten vorgegebenen Weise behandelt, wobei sich diese zweite vorgegebene Weise von der ersten vorgegebenen Weise unterscheidet. Vorteilhaft weisen die Behältnisse einen Grundkörper mit einem von einem kreisförmigen Querschnitt abweichenden Querschnitt auf.

Vorteilhaft weist die zweite Behandlungseinheit eine Vielzahl von Behandlungsstationen zum Behandeln von Behältnissen auf. Die Behältnisse werden vorteilhaft in einer solchen Drehstellung bzgl. ihrer Längsachse an einem Träger der zweiten Behandlungseinheit angeordnet, dass eine Anzahl der aufnehmbaren Behältnisse maximal ist (bzw. ein Abstand zwischen den Längsachsen zweier benachbarter Behältnisse minimal ist).

Erfindungsgemäß weist die Transporteinrichtung eine zweite Transporteinheit auf, die in der Transportrichtung der Behältnisse nach der ersten Transporteinheit angeordnet ist und welche die Behältnisse während ihres Transports um einen vorgegebenen Winkel bezüglich der Behältnis - Längsachse dreht.

Es wird daher auch verfahrensseitig vorgeschlagen, dass die Behältnisse jeweils um einen vorgegebenen Winkel gedreht werden, bevor sie der zweiten Behandlungseinheit zugeführt werden.

Bei einer weiteren vorteilhaften Ausführungsform führt die Transporteinrichtung die Behältnisse wenigstens abschnittsweise entlang eines vorgegebenen geradlinigen Transportpfades. So handelt es sich erfindungsgemäß bei der ersten Transporteinheit um einen Luftförderer, der die Behältnisse vorzugsweise geradlinig fördert. Auch bei der zweiten Transporteinheit, welche die Behältnisse zusätzlich dreht, kann es sich um einen Förderer handeln, der die Behältnisse entlang eines geradlinigen Transportpfades transportiert.

Bei einer weiteren vorteilhaften Ausführungsform transportiert wenigstens eine Behandlungseinheit die Behältnisse entlang eines kreisförmigen Transportpfades.

Weitere Vorteile und Ausführungsformen ergeben sich aus den beigefügten Zeichnungen. Darin zeigen:
- Fig. 1: eine grobschematisch blockdiagrammartige Darstellung einer erfindungsgemäßen Vorrichtung;
- Fig. 2: eine schematische Darstellung eines Luftförderers;
- Fig. 3: eine grobschematische Darstellung einer zweiten Transporteinheit; und
- Fig. 4: eine weitere Darstellung einer erfindungsgemäßen Vorrichtung.

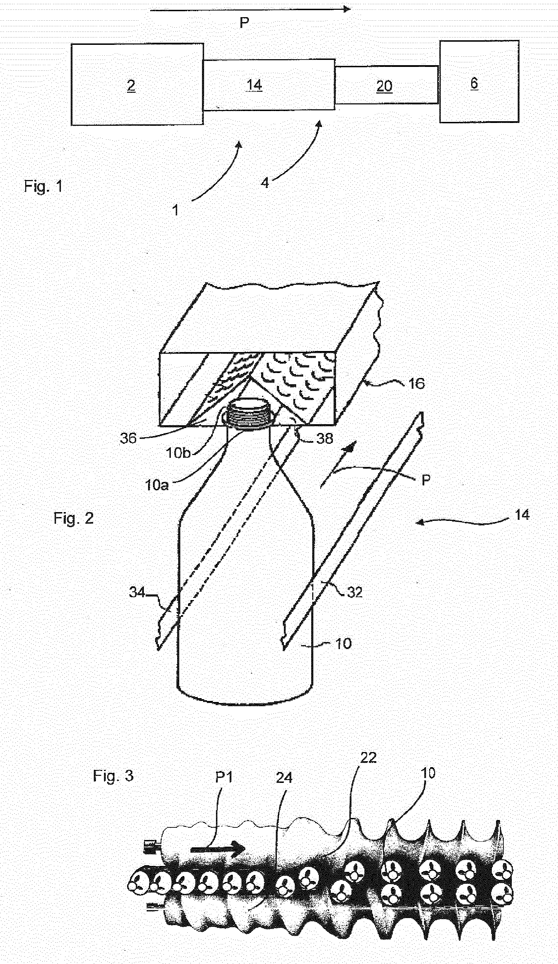

Fig. 1 zeigt eine blockdiagrammartige Darstellung einer erfindungsgemäßen Vorrichtung 1. Diese Vorrichtung weist eine erste Behandlungseinheit 2 auf, welche Behältnisse (nicht gezeigt) in einer ersten vorgegebenen Weise behandelt. Danach werden die Behältnisse mit einer in ihrer Gesamtheit mit 4 gekennzeichneten Transporteinrichtung, welche zwei Transporteinheiten 14 und 20 aufweist, zu einer zweiten Behandlungseinheit 6 transportiert. Die zweite Behandlungseinheit behandelt ebenfalls die Behältnisse in einer vorgegebenen Weise.

Bei der ersten Transporteinheit 14 handelt es sich erfindungsgemäß um einen Luftförderer, der die Behältnisse nicht vereinzelt, sondern aneinander angeordnet transportiert. Das Bezugszeichen 20 kennzeichnet eine zweite Transporteinheit, welche die von der ersten Transporteinheit 14 transportierten Behältnisse um einen vorgegebenen Winkel, beispielsweise um 90° dreht.

Fig. 2 zeigt eine schematische Darstellung einer ersten Transporteinheit 14, die für sich genommen aus dem Stand der Technik bekannt ist. Diese Transporteinheit 14 weist dabei eine Führungseinrichtung 16 auf, welche die Behältnisse 10 an ihrem Tragring stützt, wobei die Behältnisse 10 gegenüber dieser Führungseinrichtung (und bevorzugt hängend an dieser) bewegbar sind. Die Bezugszeichen 36 und 38 kennzeichnen Führungsschienen, auf denen das Behältnis mit seinem Tragring 10a aufliegt. Das Behältnis 10, welches hier zwar kreisförmig dargestellt ist, jedoch im Rahmen der Erfindung bevorzugt einen von einem kreisförmigen Querschnitt abweichenden Querschnitt aufweist, wird entlang des Transportpfads P transportiert. Die Bezugszeichen 32 und 34 kennzeichnen weitere Führungselemente, welche das Behältnis 10 seitlich während seiner Bewegung entlang des Transportpfades P führen. Bei den Behältnissen handelt es sich insbesondere um Kunststoffbehältnisse.

Das Bezugszeichen 10b kennzeichnet eine Mündung des Behältnisses, die oberhalb des Tragrings 10a angeordnet ist. Das Behältnis 10 wird hier vorteilhaft durch Beaufschlagung mit Druckluft entlang des Transportpfades P transportiert. Falls das Behältnis 10 einen von einem kreisförmigen Querschnitt abweichenden Querschnitt aufweist, wird es sich bei der Beaufschlagung mit einer Luftströmung tendenziell bezüglich seiner Längsachse L so drehen, dass seine längere Achse parallel zu der Luftströmung verläuft.

Fig. 3 zeigt eine schematische Darstellung einer zweiten Transporteinheit 20. Diese zweite Transporteinheit 20 weist hier zwei Schnecken 22, 24 auf, zwischen denen die Behältnisse, hier Behältnisgebinde, entlang des Transportpfades P1 gefördert werden. Diese beiden Schnecken drehen sich um zwei zueinander parallele Achsen X, Y. Man erkennt, dass diese Schnecken so aufeinander angepasst sind, dass die Behältnisse durch die jeweiligen Eingriffe mit den Außenumfängen der Schnecken 22, 24 hier um 90° gedreht werden. Eine entsprechende Ausgestaltung ist auch möglich, wenn es sich bei den Behältnissen nicht um Gebinde aus zwei Flaschen handelt, sondern um Behältnisse mit einem Außenumfang, der von einem kreisförmigen Querschnitt abweicht.

Daneben wäre es auch möglich, dass die zweite Transporteinheit zusätzlich als Einteileinheit ausgebildet ist, welche zwischen den einzelnen Behältnissen eine vorgegebene Teilung erzeugt, so dass die Behältnisse teilungsgereicht von einer weiteren Einheit, wie etwa der zweiten Behandlungseinheit übernommen werden können. Damit bewirkt die zweite Transporteinheit 20, dass sämtliche von ihr transportierten Behältnisse um einen vorgegebenen Winkel bezüglich ihrer Längsachse L, hier um 90° gedreht werden.

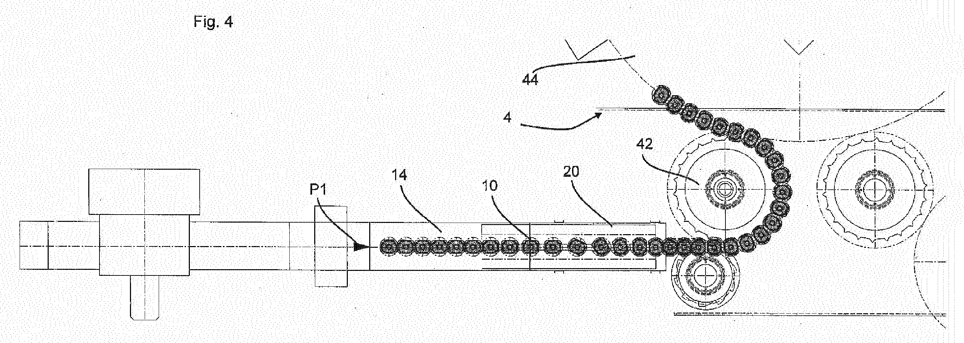

Fig. 4 zeigt eine weitere Darstellung einer erfindungsgemäßen Vorrichtung 1. Man erkennt hier auch wieder die erste Transporteinheit 14, die als Luftförderer ausgestaltet ist und die Behältnisse entlang des Pfeils P1 fördert. Unmittelbar an diese erste Transporteinheit 14 schließt sich eine zweite Transporteinheit 20 an, welche, wie hier gezeigt, die Behältnisse um 90° im Uhrzeigersinn dreht. An diese zweite Transporteinheit 20 wiederum schließt sich eine insgesamt mit 4 bezeichnete zweite Behandlungseinheit an. Diese zweite Behandlungseinheit 4 weist dabei einen Eintaktstern 42 auf, der die Behältnisse 10 an ein Trägerrad 44 zur Behandlung übergibt. Man erkennt, dass dabei die Behältnisse bereits derart dem Einführstern 42 zugeführt werden, dass die kürzere Seite der Behältnisse tangential dem Zuführrad 42 zugeführt wird. Auch sind die Behältnisse 10 derart an dem Träger 44 angeordnet, dass die jeweils kürzere Seite der Behältnisse tangential zu dem Träger 44 (bzw. im Wesentlichen in dessen Umfangsrichtung) verläuft.

Auf diese Weise kann für die Behandlung der Behältnisse mit der zweiten Behandlungseinheit 4 eine erhebliche Platzeinsparung erreicht werden.

### Bezugszeichenliste

- 1: Vorrichtung
- 2: erste Behandlungseinheit
- 4: Transporteinrichtung
- 6: zweite Behandlungseinheit
- 10: Behältnisse
- 10a: Tragring
- 10b: Mündung des Behältnisses
- 14: erste Transporteinheit, Luftförderer
- 16: Führungseinrichtung
- 20: zweite Transporteinheit
- 22, 24: Schnecken
- 32, 34: Führungselemente
- 36, 38: Führungsschienen
- 42: Eintaktstern, Zuführrad
- 44: Träger
- P: Transportpfad
- L: Längsrichtung der Behältnisse
- X, Y: Drehachse

## Patentansprüche

1. Vorrichtung zum Behandeln von Behältnissen (10) mit einer ersten Behandlungseinheit (2), welche die Behältnisse (10) in einer ersten vorgegebenen Weise behandelt, einer Transporteinrichtung (4), welche die Behältnisse (10) von der ersten Behandlungseinheit (2) abtransportiert und mit einer zweiten Behandlungseinheit (6), welche in der Transportrichtung der Behältnisse (10) nach der ersten Behandlungseinheit (2) angeordnet ist und welche die Behältnisse in einer zweiten vorgegebenen Weise behandelt, wobei die Transporteinrichtung (4) eine erste Transporteinheit (14) zum Transportieren der Behältnisse (10) aufweist, und diese erste Transporteinheit (14) eine Führungseinrichtung (16) aufweist, welche die Behältnisse (10) kontaktiert und gegenüber der die Behältnisse (10) bewegt werden und die Transporteinrichtung (4) eine zweite Transporteinheit (20) aufweist, die in der Transportrichtung der Behältnisse (10) nach der ersten Transporteinheit (14) angeordnet ist und welche die Behältnisse (10) während ihres Transports um einen vorgegebenen Winkel bezüglich der Behältnislängsachse (L) dreht,
**dadurch gekennzeichnet, dass**
die erste Transporteinheit (14) ein Luftförderer (14) ist.

2. Vorrichtung nach Anspruch 1,
**dadurch gekennzeichnet, dass**
die zweite Transporteinheit (20) die Behältnisse (10) in der gedrehten Stellung der zweiten Behandlungseinheit (6) zuführt.

3. Vorrichtung nach wenigstens einem der vorangegangenen Ansprüche
**dadurch gekennzeichnet, dass**
die erste Behandlungseinheit (2) und/oder die zweite Behandlungseinheit (6) aus einer Gruppe von Behandlungseinheiten ausgewählt ist, welche Umformungseinrichtungen zum Umformen von Kunststoffvorformlingen zu Kunststoffbehältnissen, Etikettiereinrichtungen, Sterilisationseinrichtungen, Fülleinrichtungen, Verschließeinrichtungen und dergleichen enthält.

4. Vorrichtung nach wenigstens einem der vorangegangenen Ansprüche
**dadurch gekennzeichnet, dass**
die zweite Transporteinheit die Behältnisse entlang eines vorgegebenen Transportpfades transportiert.

5. Vorrichtung nach wenigstens einem der vorangegangenen Ansprüche
**dadurch gekennzeichnet, dass**
die zweite Transporteinheit (20) die Behältnisse (10) zwischen deren Boden und deren Mündung an deren Grundkörper kontaktiert.

6. Vorrichtung nach wenigstens einem der vorangegangenen Ansprüche
**dadurch gekennzeichnet, dass**
die zweite Transporteinheit (20) zwei gegenüberliegende drehbare Schnecken (22, 24) aufweist, zwischen denen die Behältnisse (10) gefördert werden.

7. Vorrichtung nach wenigstens einem der vorangegangenen Ansprüche,
**dadurch gekennzeichnet, dass**
die zweite Transporteinheit (20) aus dem Transportpfad der Behältnisse (10) auskoppelbar ist.

8. Verfahren zum Behandeln von Behältnissen (10) mit den Schritten
- Behandeln der Behältnisse (10) in einer ersten vorgegebenen Weise mittels einer ersten Behandlungseinheit (2);
- Transportieren der Behältnisse (10) von der ersten Behandlungseinheit (2) zu einer zweiten Behandlungseinheit (6) mit einer Transporteinrichtung, wobei die Transporteinrichtung eine erste Transporteinheit (14) aufweist, welche die Behältnisse transportiert und die erste Transporteinheit (14) eine Führungseinrichtung (16) aufweist, welche die Behältnisse (10) kontaktiert und gegenüber der die Behältnisse (10) bewegt werden;
- Behandeln der Behältnisse (10) mit der zweiten Behandlungseinheit (6) in einer zweiten vorgegebenen Weise, welche sich von der ersten vorgegebenen Weise unterscheidet, wobei die Transporteinrichtung (4) weiter eine zweite Transporteinheit (20) aufweist, die in der Transportrichtung der Behältnisse (10) nach der ersten Transporteinheit (14) angeordnet ist und welche die Behältnisse (10) während ihres Transports um einen vorgegebenen Winkel bezüglich deren Behältnislängsachse (L) dreht,
**dadurch gekennzeichnet, dass**
die erste Transporteinheit (14) ein Luftförderer (14) ist.

9. Verfahren nach Anspruch 8,
**dadurch gekennzeichnet, dass**
die Transporteinrichtung (4) die Behältnisse (10) wenigstens abschnittsweise entlang eines vorgegebenen geradlinigen Transportpfades (P) führt.

10. Verfahren nach wenigstens einem der vorangegangenen Ansprüche,
**dadurch gekennzeichnet, dass**
wenigstens eine Behandlungseinheit (2, 6) die Behältnisse entlang eines kreisförmigen Transportpfades transportiert.

## Claims

1. Apparatus for treating containers (10), comprising a first treatment unit (2) which treats the containers (10) in a first predefined manner, a transport device (4) which transports the containers (10) away from the first treatment unit (2), and a second treatment unit (6) which is arranged downstream of the first treatment unit (2) in the transport direction of the containers (10) and which treats the containers in a second predefined manner, wherein the transport device (4) has a first transport unit (14) for transporting the containers (10) and this first transport unit (14) has a guide device (16) which makes contact with the containers (10) and relative to which the containers (10) are moved, and the transport device (4) has a second transport unit (20) which is arranged downstream of the first transport unit (14) in the transport direction of the containers (10) and which rotates the containers (10) through a predefined angle relative to the container longitudinal axis (L) during transport of said containers
**characterised in that**
the first transport unit (14) is an air conveyor (14).

2. Apparatus according to claim 1,
**characterised in that**
the second transport unit (20) feeds the containers (10) in the rotated position to the second treatment unit (6).

3. Apparatus according to at least one of the preceding claims,
**characterised in that**
the first treatment unit (2) and/or the second treatment unit (6) is selected from a group of treatment units which includes transforming devices for transforming plastic preforms into plastic containers, labelling devices, sterilising devices, filling devices, closing devices and the like.

4. Apparatus according to at least one of the preceding claims,
**characterised in that**
the second transport unit transports the containers along a predefined transport path.

5. Apparatus according to at least one of the preceding claims,
**characterised in that**
the second transport unit (20) makes contact with the containers (10) between the base thereof and the mouth thereof on the main body thereof.

6. Apparatus according to at least one of the preceding claims,
**characterised in that**
the second transport unit (20) has two rotatable screws (22, 24) located opposite one another, between which the containers (10) are conveyed.

7. Apparatus according to at least one of the preceding claims,
**characterised in that**
the second transport unit (20) can be removed from the transport path of the containers (10).

8. Method for treating containers (10), comprising the steps
- treating the containers (10) in a first predefined manner by means of a first treatment unit (2);
- transporting the containers (10) from the first treatment unit (2) to a second treatment unit (6) by means of a transport device, wherein the transport device has a first transport unit (14) which transports the containers and the first transport unit (14) has a guide device (16) which makes contact with the containers (10) and relative to which the containers (10) are moved;
- treating the containers (10) by means of the second treatment unit (6) in a second predefined manner which differs from the first predefined manner,
wherein the transport device (4) has a second transport unit (20) which is arranged downstream of the first transport unit (14) in the transport direction of the containers (10) and which rotates the containers (10) through a predefined angle relative to their container longitudinal axis (L) during transport of said containers
**characterised in that**
the first transport unit (14) is an air conveyor (14).

9. Method according to claim 8,
**characterised in that**
the transport device (4) guides the containers (10) at least in some sections along a predefined straight transport path (P).

10. Method according to at least one of the preceding claims,
**characterised in that**
at least one treatment unit (2, 6) transports the containers along a circular transport path.

## Revendications

1. Dispositif destiné au traitement de récipients (10) avec une première unité de traitement (2), laquelle traite les récipients (10) d'une première manière prédéfinie, un équipement de transport (4), lequel évacue les récipients (10) de la première unité de traitement (2) et avec une deuxième unité de traitement (6), laquelle est agencée dans le sens de transport des récipients (10) après la première unité de traitement (2) et laquelle traite les récipients d'une deuxième manière prédéfinie, dans lequel l'équipement de transport (4) présente une première unité de transport (14) pour le transport des récipients (10), et cette première unité de transport (14) présente un équipement de guidage (16), lequel touche les récipients (10) et en face duquel les récipients (10) sont déplacés et l'équipement de transport (4) présente une deuxième unité de transport (20), qui est agencée dans le sens de transport des récipients (10) après la première unité de transport (14) et laquelle tourne les récipients (10) pendant leur transport d'un angle prédéfini par rapport à l'axe longitudinal de récipient (L),
**caractérisé en ce que**
la première unité de transport (14) est un convoyeur à air (14).

2. Dispositif selon la revendication 1,
**caractérisé en ce que**
la deuxième unité de transport (20) amène les récipients (10) dans la position tournée de la deuxième unité de traitement (6).

3. Dispositif selon au moins l'une quelconque des revendications précédentes
**caractérisé en ce que**
la première unité de traitement (2) et/ou la deuxième unité de traitement (6) est sélectionnée dans un groupe d'unités de traitement, lequel comporte des équipements de formage pour le formage de préformes en plastique en récipients en plastique, des équipements d'étiquetage, des équipements de stérilisation, des équipements de remplissage, des équipements de bouchage et similaires.

4. Dispositif selon au moins l'une quelconque des revendications précédentes
**caractérisé en ce que**
la deuxième unité de transport transporte les récipients le long d'un chemin de transport prédéfini.

5. Dispositif selon au moins l'une quelconque des revendications précédentes
**caractérisé en ce que**
la deuxième unité de transport (20) touche les récipients (10) entre leur fond et leur embouchure au niveau de leur corps de base.

6. Dispositif selon au moins l'une quelconque des revendications précédentes
**caractérisé en ce que**
la deuxième unité de transport (20) présente deux vis sans fin (22, 24) rotatives se faisant face, entre lesquelles les récipients (10) sont transportés.

7. Dispositif selon au moins l'une quelconque des revendications précédentes,
**caractérisé en ce que**
la deuxième unité de transport (20) peut être découplée du chemin de transport des récipients (10).

8. Procédé destiné au traitement de récipients (10) avec les étapes suivantes
- le traitement des récipients (10) d'une première manière prédéfinie au moyen d'une première unité de traitement (2) ;
- le transport des récipients (10) de la première unité de traitement (2) à une deuxième unité de traitement (6) avec un équipement de transport, dans lequel l'équipement de transport présente une première unité de transport (14), laquelle transporte les récipients et la première unité de transport (14) présente un équipement de guidage (16), lequel touche les récipients (10) et face auquel les récipients (10) sont déplacés ;
- le traitement des récipients (10) avec la deuxième unité de traitement (6) d'une deuxième manière prédéfinie, laquelle se différencie de la première manière prédéfinie, dans lequel l'équipement de transport (4) présente en outre une deuxième unité de transport (20), qui est agencée dans le sens de transport des récipients (10) après la première unité de transport (14) et laquelle tourne les récipients (10) pendant leur transport d'un angle prédéfini par rapport à leur axe longitudinal de récipient (L),
**caractérisé en ce que**
la première unité de transport (14) est un convoyeur à air (14).

9. Procédé selon la revendication 8,
**caractérisé en ce que**
l'équipement de transport (4) guide les récipients (10) au moins par section le long d'un chemin de transport (P) rectiligne prédéfini.

10. Procédé selon au moins l'une quelconque des revendications précédentes,
**caractérisé en ce que**
au moins une unité de traitement (2, 6) transporte les récipients le long d'un chemin de transport circulaire.
